# EUROPEAN PATENT APPLICATION

(11) **EP 4 462 130 A1**
(43) Date of publication of application: **13.11.2024**
(21) Application number: 22918743.0
(22) Date of filing: 29.11.2022
(51) Int. Cl.: G01N 35/10

(54) **AUTOMATED ANALYZING DEVICE, AND DISPENSING METHOD**

(30) Priority: 06.01.2022 JP 2022001251
(71) Applicant: HITACHI HIGH-TECH CORPORATION, Tokyo 105-6409 (JP)
(72) Inventor: KAMEYAMA Hiroki, Tokyo 105-6409 (JP); MORI Takamichi, Tokyo 105-6409 (JP)
(74) Representative: Strehl Schübel-Hopf & Partner
(86) International application number: PCT/JP2022/043870
(87) International publication number: WO 2023/132156

(57) **Abstract**

An object of the invention is to provide a technique that can accurately determine whether a liquid surface height of a liquid is abnormal when a dispensing probe dispenses the liquid. An automatic analyzer according to the invention sets a normal range and an abnormal range above and below a previously detected liquid surface height, regards a liquid surface height as normal when a liquid surface is detected in the normal range, and regards a liquid surface height as abnormal when a liquid surface is detected in the abnormal range. When a liquid surface is detected above or below a range in which a variation is added to the previously detected liquid surface height, a liquid surface height is also regarded as normal under a predetermined condition (see FIG. 3).

## Description

### Technical Field

The present invention relates to an automatic analyzer including a dispensing probe that dispenses a liquid.

### Background Art

An automatic analyzer is a device that analyzes a concentration or the like of a predetermined component in a liquid sample such as blood or urine. The automatic analyzer analyzes a sample when a reagent, which specifically reacts with a component to be measured in a biological sample to change physical properties, is mixed and caused to react with the biological sample. In dispensing the reagent, an increase in dispensing efficiency is required as a speed of the automatic analyzer increases, and stable and accurate dispensing is required to improve analysis accuracy.

In order to increase the dispensing efficiency and dispensing accuracy, it is important to increase accuracy of detecting a liquid surface (or a liquid surface height) of a liquid to be dispensed. For example, when a tip end of a dispensing probe and a liquid coming into contact with each other is detected, a liquid surface can be detected.

PTL 1 discloses a technique for increasing the dispensing efficiency. The same literature discloses a method in which a liquid surface detection mechanism is provided in a dispensing probe that dispenses a reagent, a detected liquid surface height is stored, a predetermined amount above the stored liquid surface height is set as a lowering speed switching height of the probe, the probe is lowered at a high speed to the switching height, and the probe is lowered at a low speed from the switching height.

PTL 2 discloses a technique for performing stable and accurate dispensing. The same literature discloses a method in which a liquid surface height detected by a dispensing probe including a liquid surface detection mechanism is stored, the stored liquid surface height and an actually detected liquid surface height are compared, and an abnormal state during analysis is determined based on whether a difference thereof is within a predetermined range.

### Citation List

### Patent Literature

PTL 1: JP2012-007998A
PTL 2: JP2004-028673A

### Summary of Invention

### Technical Problem

In the technique disclosed in PTL 1, the predetermined amount above the liquid surface height during previous dispensing is set as the lowering speed switching height of the probe. Therefore, in a case where an error occurs when detecting the liquid surface height during the previous dispensing and a liquid surface is detected to be high, a distance between the lowering speed switching height and an actual liquid surface becomes long, so that a distance by which the dispensing probe is lowered at a low speed also becomes long, and thus dispensing efficiency may be adversely influenced. Similarly, when a liquid surface is detected to be low, the distance between the lowering speed switching height and the actual liquid surface becomes short, and thus the liquid surface may be detected during deceleration or at a high speed. In order to prevent this, it is necessary to secure a large margin value for the speed switching height. Accordingly, the dispensing efficiency is adversely influenced. Therefore, the liquid surface detection accuracy may influence the dispensing efficiency.

In the technique disclosed in PTL 2, the abnormal state is determined by whether the difference between the liquid surface height during the previous dispensing and the actual liquid surface detection height is within the predetermined range. Therefore, it is difficult to detect abnormality (for example, abnormality of a dispensing system occurs during use of the reagent, or abnormality such as a case where a aspiration amount of the reagent is smaller than a set value) that cannot be determined if changes in the liquid surface since when the reagent is started to be used or when the reagent is dispensed several times before are not compared.

The invention has been made in view of the above-described problems, and an object thereof is to provide a technique that can accurately determine whether a liquid surface height of a liquid is abnormal when a dispensing probe dispenses the liquid.

### Solution to Problem

An automatic analyzer according to the invention sets a normal range and an abnormal range above and below a previously detected liquid surface height, regards a liquid surface height as normal when a liquid surface is detected in the normal range, and regards a liquid surface height as abnormal when a liquid surface is detected in the abnormal range. When a liquid surface is detected above or below a range in which a variation is added to the previously detected liquid surface height, a liquid surface height is also regarded as normal under a predetermined condition.

### Advantageous Effects of Invention

According to an automatic analyzer in the invention, it is possible to provide an automatic analyzer that can appropriately detect abnormality and perform dispensing without influencing dispensing efficiency. Problems, configurations, and effects other than those described above will be made clear by the following description of embodiments.

### Brief Description of Drawings

[FIG. 1] FIG. 1 is a perspective view of an automatic analyzer 100 according to Embodiment 1.
[FIG. 2] FIG. 2 is a diagram showing a probe lowering speed and a lowering amount from a reference point during reagent dispensing when a pulse motor is used as a power source that moves a reagent probe 7a up and down (movement in a longitudinal direction) in Embodiment 1.
[FIG. 3] FIG. 3 shows a height of a reagent liquid surface obtained based on a previous liquid surface height stored in a storage unit 21a and determination ranges set for heights at each of which a liquid surface is actually detected in Embodiment 1.
[FIG. 4] FIG. 4 is a graph exemplifying a temporal change in a liquid surface height when reagent aspiration is repeated from a reagent bottle.
[FIG. 5] FIG. 5 is a diagram showing a detailed structure of a reagent bottle 10 and a change in a reagent liquid surface.
[FIG. 6] FIG. 6 is a graph showing a temporal change in a liquid surface height in a process described in (2) and (3) in FIG. 5.
[FIG. 7] FIG. 7 is a graph exemplifying a temporal change in a liquid surface height when the reagent aspiration is repeated from a reagent bottle.
[FIG. 8] FIG. 8 is a graph exemplifying a temporal change in a liquid surface height when the reagent aspiration is repeated from a reagent bottle.
[FIG. 9] FIG. 9 shows results of obtaining a height of a reagent liquid surface based on a previous liquid surface height stored in the storage unit 21a when the liquid surface is detected at an upper limit and a lower limit of a range 2.
[FIG. 10] FIG. 10 is a graph exemplifying a temporal change in a liquid surface height when the reagent aspiration is repeated from a reagent bottle.
[FIG. 11] FIG. 11 is a flowchart illustrating a procedure of a controller 21 detecting a liquid surface height.
[FIG. 12] FIG. 12 is a diagram showing a probe lowering speed and a lowering amount from a reference point during reagent dispensing in Embodiment 2.

### Description of Embodiments

### <Embodiment 1>

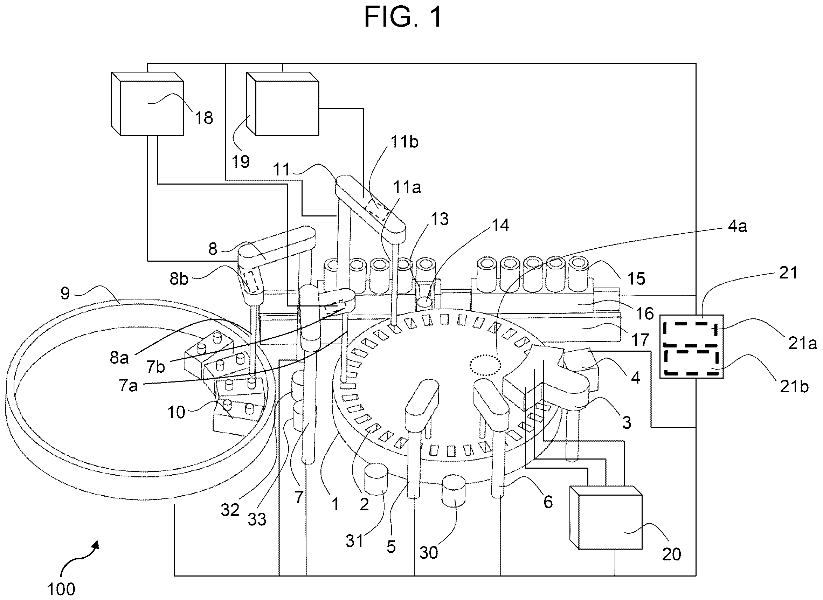

FIG. 1 is a perspective view of an automatic analyzer 100 according to Embodiment 1 of the invention. The automatic analyzer 100 is a device that dispenses samples and reagents into a plurality of reaction containers 2 to cause the samples and the reagents to react with each other, and that measures the reacted liquids. The automatic analyzer 100 includes a reaction disk 1, a reagent disk 9, a sample transport mechanism 17, reagent dispensing mechanisms 7 and 8, a reagent syringe 18, a sample dispensing mechanism 11, a sample syringe 19, a cleaning mechanism 3, a light source 4a, a spectrophotometer 4, stirring mechanisms 5 and 6, a cleaning pump 20, cleaning tanks 13, 30, 31, 32, and 33, and a controller 21. The controller 21 controls the units provided in the automatic analyzer 100.

The reaction containers 2 are arranged circumferentially on the reaction disk 1. The sample transport mechanism 17 that moves a rack 16 where sample containers 15 are placed is provided near the reaction disk 1.

The sample dispensing mechanism 11 that can rotate and move up and down is provided between the reaction disk 1 and the sample transport mechanism 17. The sample dispensing mechanism 11 includes a sample probe 11a and a liquid surface detection mechanism 11b. The sample syringe 19 is connected to the sample probe 11a. The sample probe 11a moves while drawing an arc around a rotation axis to dispense a sample from the sample container 15 to the reaction container 2.

A detergent 14 for cleaning the sample probe 11a is disposed on a rotation trajectory of the sample probe 11a. There is a case where the detergent is put in a bottle and used, a case where a detergent container is used to automatically supply the detergent, and the like.

A plurality of reagent bottles 10 can be placed circumferentially on the reagent disk 9. The reagent disk 9 is cooled.

The reagent dispensing mechanisms 7 and 8 that can rotate and move up and down are provided between the reaction disk 1 and the reagent disk 9, and include reagent probes 7a and 8a and liquid surface detection mechanisms 7b and 8b, respectively. The reagent syringe 18 is connected to the reagent probes 7a and 8a. The reagent probes 7a and 8a are moved while drawing an arc around rotation axes, access an inside of the reagent disk 9, and dispense reagents from the reagent bottles 10 to the reaction containers 2.

Around the reaction disk 1, the cleaning mechanism 3, the light source 4a, the spectrophotometer 4, and the stirring mechanisms 5 and 6 are further disposed. The cleaning pump 20 is connected to the cleaning mechanism 3. The cleaning tanks 13, 30, 31, 32, and 33 are provided in operation ranges of the reagent dispensing mechanisms 7 and 8, the sample dispensing mechanism 11, and the stirring mechanisms 5 and 6. The cleaning tanks 13, 30, 31, 32, and 33 use a cleaning liquid supplied from the cleaning pump 20 to clean the probes and clean the stirring mechanisms. A test sample (specimen) such as blood is contained in the sample container 15, placed on the rack 16, and transported by the sample transport mechanism 17. In addition, the mechanisms are connected to the controller 21 including a storage unit 21a and a control unit 21b.

As the liquid surface detection mechanisms 7b, 8b, and 11b, well-known methods such as a method for detecting a change in an electrostatic capacitance or a resistance value of a sample or a reagent, a method for using refraction or reflection due to light or ultrasonic waves, and a method for detecting a pressure change in a liquid in a probe can be used. Any one of those methods can be used in the invention, but it is assumed that the electrostatic capacitance change detection method is used for the sake of convenience in present Embodiment 1, and detailed description thereof is omitted because it is well-known.

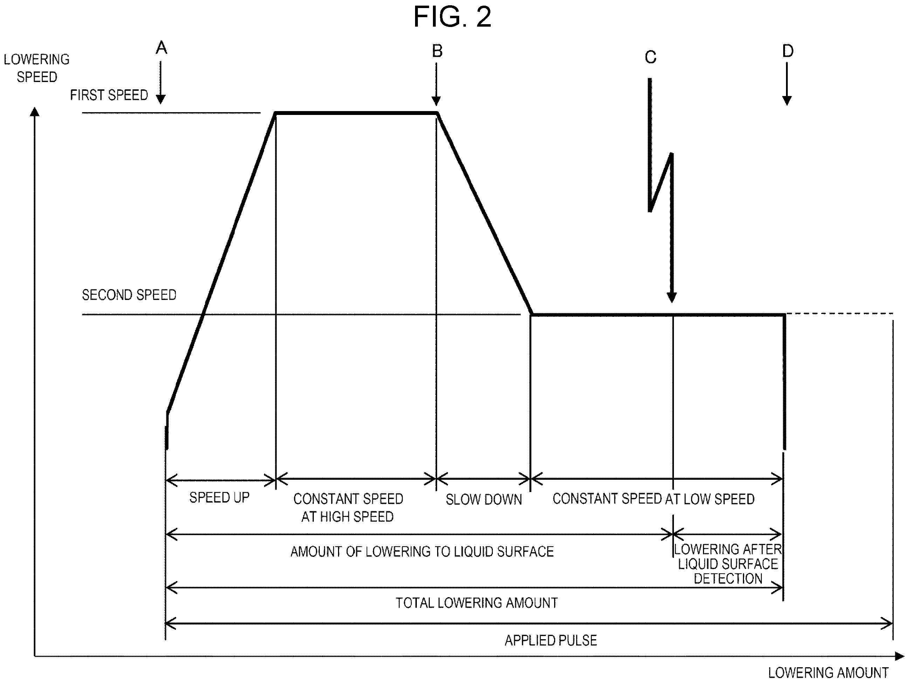

FIG. 2 is a diagram showing a probe lowering speed and a lowering amount from a reference point during reagent dispensing when a pulse motor is used as a power source that moves the reagent probe 7a up and down (movement in a longitudinal direction) in present Embodiment 1. Since functions and operations of the two systems, that is, the reagent dispensing mechanisms 7 and 8 are the same, the reagent dispensing mechanism 7 will be described as an example.

First, the reagent probe 7a is positioned above the reagent bottles 10 to be dispensed by a rotation mechanism of the reagent dispensing mechanism 7. At this time, a position of the reagent probe 7a in an upper-lower direction is a position where the reagent probe 7a does not interfere with another mechanism or the reagent bottle 10 by a rotation operation, and a height thereof is set as a reference point (a point A in FIG. 2) of an operation in the upper-lower direction.

Subsequently, the reagent probe 7a is accelerated until a first speed is reached from the reference point (the point A in FIG. 2) of the operation in the upper-lower direction, and is lowered to a point B in FIG. 2 at the first speed. The point B indicates a set speed switching height at which the reagent probe 7a is decelerated to a second speed lower than the first speed based on a previous liquid surface height stored in the storage unit 21a, and that includes a margin value such that a liquid surface can be detected at the second speed. At and after the speed switching height (the point B in FIG. 2), the reagent probe 7a is decelerated to the second speed, and after the liquid surface is detected (a point C in FIG. 2) at the second speed, the reagent probe 7a is lowered and stopped at a predetermined lowered position after liquid surface detection (a point D in FIG. 2) necessary for aspiration of the reagent. The controller 21 stores a height during the liquid surface detection in the storage unit 21a. The liquid surface detection height is stored for each dispensing.

A pulse applied to the lowering operation (a lowest end position during lowering) is set to include a margin value in consideration of a fact that the reagent liquid surface fluctuates due to, for example, shaking of the reagent liquid surface.

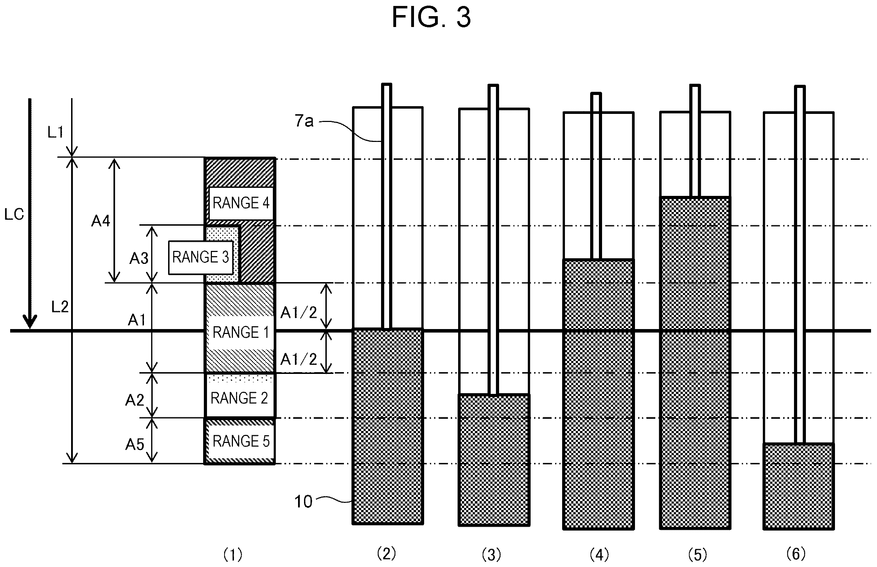

FIG. 3 shows a height of a reagent liquid surface obtained based on a previous liquid surface height stored in the storage unit 21a and determination ranges set for heights at each of which a liquid surface is actually detected in present Embodiment 1. LC is a distance from the reference point A of an operation in the upper-lower direction to a reagent liquid surface obtained based on a previous liquid surface height stored in the storage unit 21a. L1 is a distance from the reference point A of the operation in the upper-lower direction to a point where the deceleration to the second speed is completed. L2 is a distance by which the reagent probe 7a is lowered at the second speed. In an actual dispensing operation, the predetermined lowering after liquid surface detection necessary for the aspiration of the reagent is performed at the second speed after a liquid surface is detected, but in order to facilitate description, a distance by which the predetermined lowering after liquid surface detection necessary for the aspiration of the reagent is performed is not included in L2 shown in FIG. 3.

The reagent probe 7a is lowered at the second speed, and detects the liquid surface. According to a difference between the reagent liquid surface obtained based on the previous liquid surface height stored in the storage unit 21a and the liquid surface height at which the liquid surface is actually detected, ranges 1 to 5 in each of which an operation after the liquid surface detection is different are provided.

The range 1 is a range in which it is determined that the liquid surface is normally detected in consideration of various variations such as the vertical movement mechanism and the liquid surface detection mechanism 7b of the reagent dispensing mechanism 7, and the shaking of the reagent liquid surface. Since the variations are the same in the upper-lower direction, the range 1 is a range symmetrical to the reagent liquid surface obtained based on the previous liquid surface height. When the liquid surface is detected in the range 1 ((2) in FIG. 3), the controller 21 determines that the liquid surface height is normal, and the predetermined lowering after liquid surface detection (for example, 5 mm) necessary for the aspiration of the reagent is performed to aspiration the reagent.

The range 2 indicates a case where the liquid surface is detected below the range 1 ((3) in FIG. 3). When the liquid surface is detected in the range 2, the controller 21 determines that the liquid surface is normally detected. Since the liquid surface is normally detected, the predetermined lowering after liquid surface detection necessary for the aspiration of the reagent is performed to aspiration the reagent.

The range 3 indicates a case where the liquid surface is detected above the range 1 ((4) in FIG. 3). When the liquid surface is detected in the range 2 (the previously detected liquid surface is in the range 2) before the liquid surface is detected in the range 3, the controller 21 determines that the liquid surface is normally detected. A criteria for determining the range 3 will be described again together with a reason for providing the ranges 2 and 3. Since the liquid surface is normally detected, the predetermined lowering after liquid surface detection necessary for the aspiration of the reagent is performed to aspiration the reagent.

The range 4 indicates a case where the liquid surface is detected above the range 3, or above the range 1 without history corresponding to the range 2 (the previously detected liquid surface is not in the range 2, and the currently detected liquid surface is in the range 4) ((5) in FIG. 3). When the liquid surface is detected in the range 4, the controller 21 determines that the liquid surface detection is abnormal due to, for example, bubbles, and the predetermined lowering after liquid surface detection necessary for the aspiration of the reagent is performed without aspirating the reagent, and an alert is issued.

The range 5 indicates a case where the liquid surface is detected below the range 2 ((6) in FIG. 3). When the liquid surface is detected in the range 5, the controller 21 determines that the liquid surface height is abnormal due to, for example, excessive evaporation of the reagent, and the predetermined lowering after liquid surface detection necessary for the aspiration of the reagent is performed without aspirating the reagent, and an alert is issued.

When the liquid surface detection mechanism 7b does not detect the liquid surface even if the reagent probe 7a reaches a lowest point (L1, L2, and a lowest position set based on a predetermined lowering amount after liquid surface detection necessary for the aspiration of the reagent), the controller 21 issues an alert indicating that the liquid surface is abnormal.

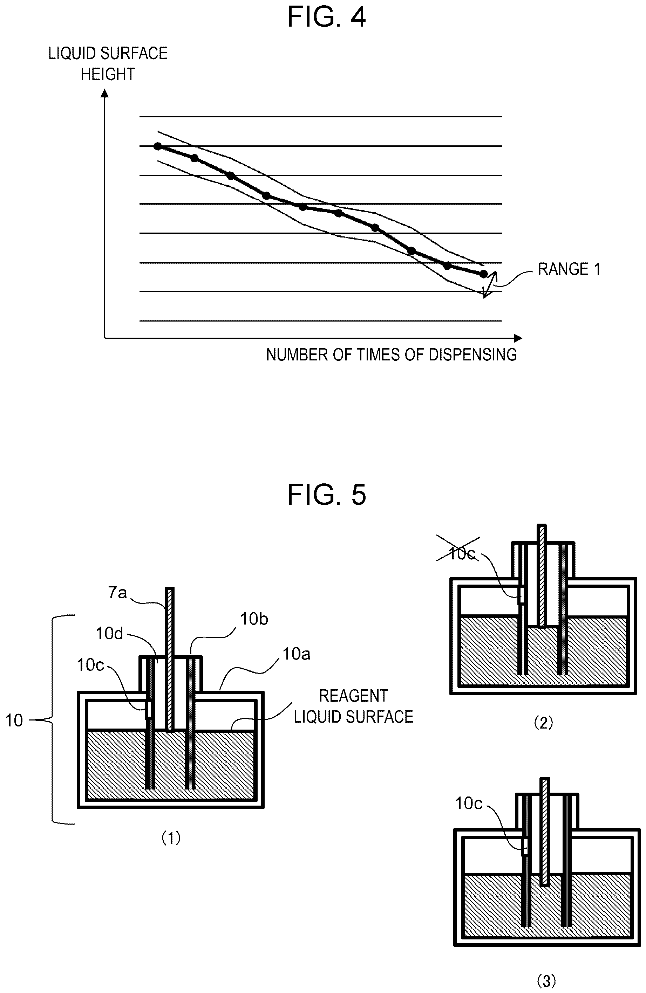

FIG. 4 is a graph exemplifying a temporal change in a liquid surface height when the reagent aspiration is repeated from a reagent bottle. The example indicates a case where the liquid surface is detected in the range 1 in each aspiration. In this case, a relationship between the reagent liquid surface height and the number of times of dispensing is a relationship in which the liquid surface gradually lowers with variations up and down within the range 1.

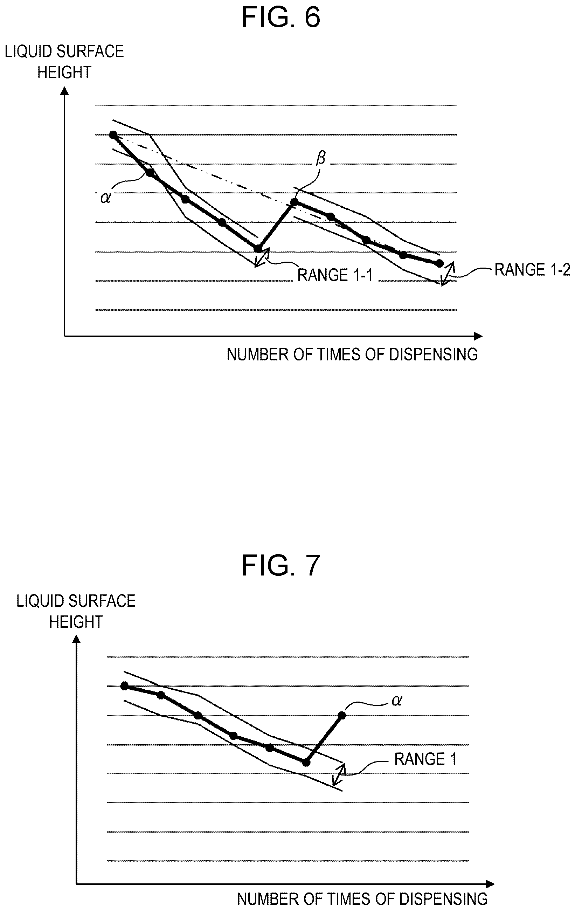

FIG. 5 is a diagram showing a detailed structure of the reagent bottle 10 and a change in the reagent liquid surface. A reason for providing the ranges 2 and 3 will be described using FIG. 5 and FIG. 6 to be described later.

The reagent bottle 10 is mounted on the reagent disk 9, and is moved to a dispensing position by a rotational motion of the reagent disk 9. In order to prevent a fact that the reagent in the reagent bottle 10 generates bubbles due to rotation of the reagent disk 9 and the liquid surface detection mechanism 7b erroneously performs detection due to the bubbles, a partition 10b may be provided in an opening portion 10d of a reagent bottle main body 10a through which the reagent probe 7a enters for the purpose of preventing entry of the bubbles. Since an air hole 10c is formed in the partition 10b, a liquid surface outside the partition 10b and a liquid surface inside the partition 10b follow and lower due to dispensing.

However, the air hole 10c may be clogged by bubbles due to liquid nature of the reagent or an influence of tumbling and mixing before providing the reagent bottle 10 in the device. When the reagent is dispensed in the state, as compared with a case where the air hole 10c is not clogged by the bubbles, only the liquid surface inside the partition lowers ((2) in FIG. 5). Therefore, a liquid surface detection position corresponds to the range 2, the liquid surface can be regarded as normal, and thus the dispensing is continued. Since a ratio of lowering is constant while the air hole 10c is clogged, it will be within the range 1 in subsequent dispensing.

In a process of continuing the dispensing, when the clogging of the air hole 10c is eliminated because of, for example, disappearance of the bubbles, the reagent outside the partition 10b flows into the partition 10b, and a liquid surface inside the partition 10b is higher than that during previous dispensing ((3) in FIG. 5). This corresponds to the range 3. Since the liquid surface in this case can be regarded as normal, the dispensing is continued.

FIG. 6 is a graph showing a temporal change in a liquid surface height in the process shown in (2) and (3) in FIG. 5. A two-dot chain line indicates a theoretical change in the liquid surface height. As shown in (2) in FIG. 5, when the air hole 10c is clogged, since the liquid surface height decreases beyond a variation range, the liquid surface height significantly decreases beyond a theoretical range (α in FIG. 6). This corresponds to the range 2 and thus is regarded as normal. Subsequently, as shown in (3) in FIG. 5, when the clogging of the air hole 10c is eliminated, the liquid surface height is higher than that during previous detection (β in FIG. 6). This is regarded as normal because the liquid surface is detected in the range 3 after through the range 2.

As described above, in a case where the air hole 10c is clogged, when abnormality is determined only based on whether a difference between a liquid surface height during previous dispensing and an actual liquid surface detection height is within a predetermined range, the abnormality is found. However, when abnormality is determined based on a change degree and an increase and decrease amount of a liquid surface height stored for each dispensing in addition to setting the ranges 2 and 3 in advance, it is possible to continue dispensing by regarding it as normal even in such a case.

FIG. 7 is a graph exemplifying a temporal change in a liquid surface height when the reagent aspiration is repeated from a reagent bottle. The example shows a case where the liquid surface is detected in the range 4 in each aspiration. In a process of repeating the reagent aspiration, a case where the liquid surface height is above the range 1 (α in FIG. 7) at a certain time point corresponds to the range 4.

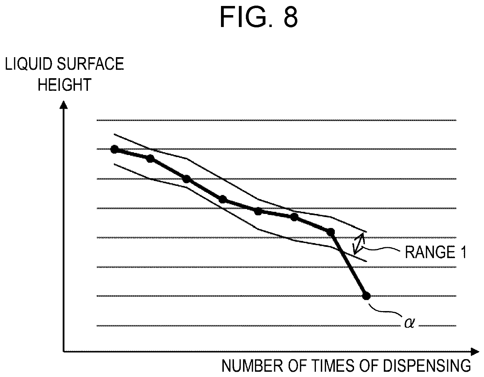

FIG. 8 is a graph exemplifying a temporal change in a liquid surface height when the reagent aspiration is repeated from a reagent bottle. The example shows a case where the liquid surface is detected in the range 5 in each aspiration. In the process of repeating the reagent aspiration, a case where the liquid surface height is below the range 1 (α in FIG. 8) at a certain time point corresponds to the range 5.

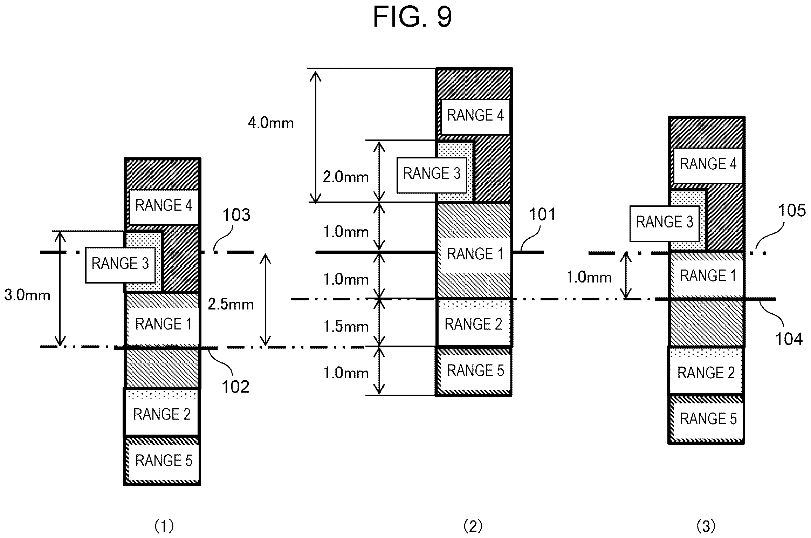

FIG. 9 shows results of obtaining a height of the reagent liquid surface based on the previous liquid surface height stored in the storage unit 21a when the liquid surface is detected at an upper limit and a lower limit of the range 2. In the example, the range 1 is 2.0 mm, the range 2 is 1.5 mm, the range 3 is 2.0 mm, the range 4 is 4.0 mm, and the range 5 is 1.0 mm. A reason why the range 3 is desirably set to be wider than the range 2 will be described using FIG. 9.

As described above, the ranges 1 to 5 are set based on a height 101 of the reagent liquid surface obtained based on the previous liquid surface height ((1) in FIG. 9). When the liquid surface is detected at the lower limit of the range 2, a height of the reagent liquid surface obtained based on the previous liquid surface height during next dispensing is 102. As described using FIG. 5, the liquid surface in the reagent bottle 10 may be higher than that during previous dispensing. For example, it is assumed that the height of the reagent liquid surface obtained based on the previous liquid surface height is 102, and then the height of the reagent liquid surface increases and becomes 103. At this time, a difference between the liquid surface 102 and the liquid surface 103 is 2.5 mm. When the ranges are set as shown in FIG. 9, an upper limit of the range 3 is 3.0 mm above the height 102 of the reagent liquid surface obtained based on the previous liquid surface height. Therefore, in this case, the liquid surface is detected in the range 3 ((2) in FIG. 9). In view of a relationship between the lower limit of the range 2 and the range 3 shown in the example, when the liquid surface is detected at the lower limit of the range 2 and then the liquid surface rises, if the range 3 is wider than the range 2, it is highly possible that the liquid surface after rising is regarded as normal.

Next, it is assumed that the range 2 and the range 3 are set to the same height (1.5 mm). The upper limit of the range 3 is 2.5 mm above the height 102 of the reagent liquid surface obtained based on the previous liquid surface height. When the liquid surface similarly rises, the liquid surface is detected at the upper limit of the range 3. The liquid surface detected at this time is normal when regarded as in the range 3. However, it is possible that the liquid surface is determined to exceed the upper limit of the range 3 and to be in the range 4 further above (abnormal) due to a minute change in the reagent liquid surface or an error of the vertical movement mechanism of the reagent dispensing mechanism 7. In this case, even if an actual liquid surface height is at the upper limit of the range 3, the actual liquid surface height is regarded as abnormal and the dispensing is not continued.

Unlike the example described above, when the liquid surface is detected at the upper limit of the range 2, a height of the reagent liquid surface obtained based on the previous liquid surface height during next dispensing is 104. Similarly, when the liquid surface rises, an actual reagent liquid surface height is 105. In this case, even if the minute change in the reagent liquid surface or the error of the vertical movement mechanism of the reagent dispensing mechanism 7 is considered, the liquid surface is determined to be in the range 1 or the range 3 (normal). Therefore, the dispensing can be continued ((3) in FIG. 9). That is, when the liquid surface is detected at the upper limit of the range 2, a failure as in a case where the liquid surface is detected at the lower limit of the range 2 does not occur.

In view of the above, when a case where the liquid surface is detected in the range 2 and then the liquid surface is detected in the range 3 is regarded as normal as possible, the range 3 is desirably set to be wider than the range 2. This corresponds to allowing the phenomenon described in (2) in FIG. 5 as much as possible. The phenomenon often occurs in the actual reagent bottle 10. Therefore, when the dispensing is desired to be continued as much as possible even if (2) in FIG. 5 temporarily occurs, it can be said that it is desirable to make the range 3 wider than the range 2.

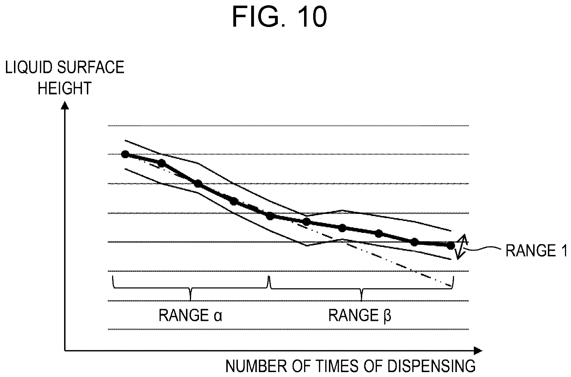

FIG. 10 is a graph exemplifying a temporal change in a liquid surface height when the reagent aspiration is repeated from a reagent bottle. A two-dot chain line indicates a theoretical change in the liquid surface height. An example in which abnormality can be determined by determining the abnormality based on a change degree and an increase and decrease amount of a liquid surface height stored for each dispensing will be described using FIG. 10.

A range α in FIG. 10 shows a change in a liquid surface height substantially equal to a theoretical liquid surface height. However, in a range β, a liquid surface lowered amount per dispensing is smaller than a theoretical value, and the reagent may not be normally aspirated. In this case, when abnormality is determined only according to whether the difference between the liquid surface height during the previous dispensing and the actual liquid surface detection height is within a predetermined range (within the range 1), normality is determined, and it is impossible to detect abnormality.

The storage unit 21a stores a liquid surface height for each dispensing. Therefore, the controller 21 can recognize that a change ratio of a liquid surface height changes between the range α and the range β in FIG. 10, or an actual liquid surface height deviates from a theoretical liquid surface height obtained based on a remaining reagent amount and a dispensing amount. The controller 21 can detect a liquid surface height as abnormality based on the above. As a cause of a change in the change ratio of the liquid surface height, for example, a case is considered where clogging occurs in a flow path of a dispensing system and a reagent aspiration amount decreases.

The determination method shown in FIG. 10 can be used in combination with the determination method described in FIGS. 3 to 9. For example, even if a liquid surface height is regarded as normal by the determination method in FIGS. 3 to 9, the determination method shown in FIG. 10 is separately performed. Accordingly, when a liquid surface height is regarded as abnormal, the controller 21 may transmit an alert indicating the abnormality.

When abnormality is determined based on the change degree and the increase and decrease amount of the liquid surface height stored for each dispensing, it is not necessary to use all stored liquid surface heights since initial aspiration of a corresponding reagent bottle. For example, liquid surface heights to be used may be limited, such as using liquid surface heights since five times before. That is, the controller 21 may perform the determination method shown in FIG. 10 by using only a part of history of measurement results of liquid surface heights.

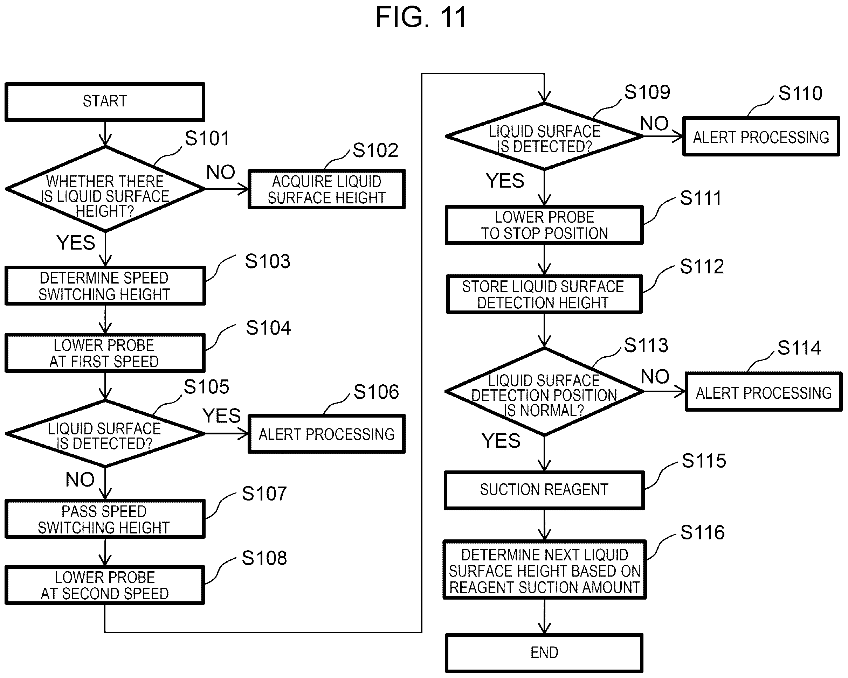

FIG. 11 is a flowchart illustrating a procedure of the controller 21 detecting a liquid surface height. The controller 21 detects a liquid surface height according to the principle described above. A target of liquid surface detection may be any liquid to be repeatedly aspirated by the dispensing probe. In the present flowchart, it is assumed that the reagent is dispensed. Hereinafter, steps in FIG. 11 will be described.

### (FIG. 11: Steps S101 to S102)

The controller 21 checks whether the storage unit 21a stores liquid surface height information on a reagent to be dispensed (S101). When there is no liquid surface height information, a liquid surface detection height is acquired using the liquid surface detection mechanism 7b (S102).

### (FIG. 11: Steps S103 to S104)

The controller 21 determines a speed switching height from the first speed to the second speed lower than the first speed based on the liquid surface height information (S103), and lowers the reagent probe 7a at the first speed while causing the liquid surface detection mechanism 7b to operate (S104).

### (FIG. 11: Steps S105 to S106)

When a liquid surface is detected at the first speed during lowering (S105: Y), normally, since a liquid surface is not detected at the first speed during lowering, for example, the controller 21 determines that a large number of bubbles are generated or the reagent is added. The controller 21 stops the dispensing probe after the slow-down operation (an operation started from the point B in FIG. 2) ends so as not to adversely influence (for example, loss of synchronization of a vertical movement motor) the vertical movement mechanism of the reagent dispensing mechanism 7. Further, the controller 21 transmits an alert indicating that the liquid surface is abnormal (S106).

### (FIG. 11: Steps S107 to S108)

When the liquid surface is not detected at the first speed and the speed switching height is reached (S107), the controller 21 switches a speed to the second speed and continues the lowering (S108).

### (FIG. 11: Steps S109 to S110)

When a lowest point is reached without detecting the liquid surface at the second speed (S109: NO), the controller 21, for example, determines that the reagent excessively evaporates or a failure occurs in the liquid surface detection mechanism 7b, and transmits an alert (S110).

### (FIG. 11: Steps S111 to S112)

When the liquid surface is detected at the second speed, the controller 21 stops the lowering of the dispensing probe after the predetermined lowering after liquid surface detection necessary for the aspiration of the reagent is performed (S 111), and stores a detected liquid surface height in the storage unit 21a (S112).

### (FIG. 11: Steps S113 to S114)

The controller 21 determines whether a liquid surface detection position is normal (S113). The determination in the present step is performed by determining abnormality based on the height of the reagent liquid surface obtained based on the previous liquid surface height stored in the storage unit 21a, the ranges 1 to 5 set for heights at each of which a liquid surface is actually detected, and the change degree and the increase and decrease amount of the liquid surface height stored for each dispensing. When abnormality is determined, the controller 21 transmits an alert (S114).

### (FIG. 11: Steps S115 to S116)

The controller 21 causes the reagent to be aspirated when normality is determined in S113 (S115), and determines a next liquid surface height based on the detected liquid surface height and a aspiration amount of the reagent (S 1 16).

### <Embodiment 1: Summary>

The automatic analyzer 100 according to present Embodiment 1 performs the abnormality determination of the liquid surface height based on the height of the reagent liquid surface obtained based on the previous liquid surface height stored in the storage unit 21a, and the ranges 1 to 5 set for the heights at each of which the liquid surface is actually detected. Accordingly, it is possible to accurately determine whether a liquid surface height of a liquid is abnormal. Further, since the dispensing probe is swiftly lowered at the first speed until the speed switching height, dispensing efficiency can be maintained.

Present Embodiment 1 can also achieve the following effects. In recent years, because of an increase in a speed of an automatic analyzer or an increase in the number of reagents that can be mounted on the automatic analyzer, a reagent dispensing mechanism that moves a reagent dispensing probe may have a two-shaft structure in which a θ shaft includes a θ1 shaft and a θ2 shaft, instead of a two-shaft structure including a Z shaft that performs a vertical operation and a θ shaft that performs a rotation operation. In this case, when an arm mounted on the Z shaft that performs the vertical operation becomes heavier, an inertia moment is increased. Accordingly, in order to accurately perform stop by a predetermined lowering amount after liquid surface detection (generally, about 3 mm to 5 mm) necessary for aspiration of a reagent after a liquid surface is detected at a high speed, it is necessary to use a more powerful and larger motor, which leads to a large size and high cost of the reagent dispensing mechanism. According to present Embodiment 1, when accuracy of determining whether the liquid surface is abnormal is increased, even if a movement speed of the probe is increased without using such a large-sized motor, it is possible to avoid a problem related to operation accuracy.

### <Embodiment 2>

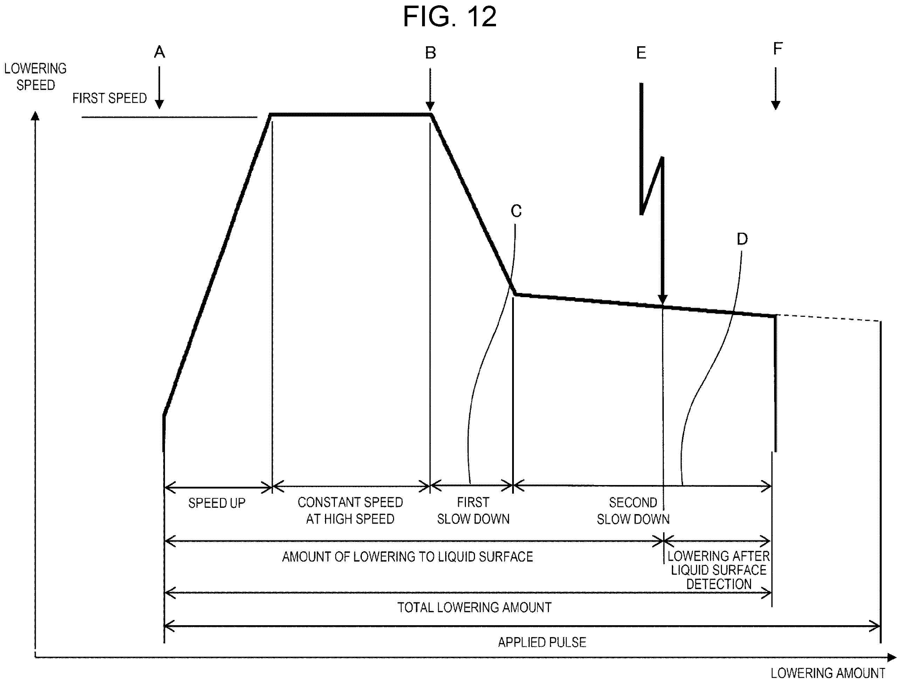

FIG. 12 is a diagram showing a probe lowering speed and a lowering amount from a reference point during reagent dispensing according to Embodiment 2 of the invention. In present Embodiment 2, in order to improve dispensing efficiency, instead of detecting a liquid surface at the second speed described in Embodiment 1, the liquid surface is detected in a second slow-down section in FIG. 12. A configuration of the automatic analyzer 100 is similar to that in Embodiment 1.

In present Embodiment 2, the reagent probe 7a is accelerated from a reference point (a point A in FIG. 12, which may be the same as the point A in FIG. 2) of an operation in an upper-lower direction until reaching the first speed, and is lowered to a point B in FIG. 12 at the first speed. The point B indicates a speed switching height set including a margin value such that the liquid surface can be detected in the second slow-down section (a section D in FIG. 12) after through a first slow-down section (a section C in FIG. 12), based on a previous liquid surface height stored in the storage unit 21a. At and after the speed switching height (the point B in FIG. 12), the liquid surface is detected in the second slow-down section (a point E in FIG. 12) after through the first slow-down section, and then the reagent probe 7a is lowered and stopped at a predetermined lowered position after liquid surface detection (a point F in FIG. 2) necessary for aspiration of the reagent, and a height when the liquid surface is detected is stored in the storage unit 21a. The liquid surface detection height is stored for each dispensing. The second slow-down section is set to a low speed that does not influence liquid surface detection accuracy.

According to present Embodiment 2, probe lowering time during reagent dispensing can be made shorter than that in Embodiment 1, and dispensing efficiency can be further improved. Since other matters are similar to those in Embodiment 1, description thereof is omitted.

### <Regarding Modification of Invention>

The invention is not limited to the embodiments described above, and includes various modifications. For example, the embodiments described above are described in detail in order to describe the present disclosure in an easy-to-understand manner, and are not necessarily limited to including all the described configurations. In addition, a part of a configuration of a certain embodiment can be replaced with a configuration of another embodiment, and a configuration of a certain embodiment can also be added to a configuration of another embodiment. In addition, it is possible to add, delete, or replace a part of a configuration of each embodiment with another configuration.

In the above embodiments, the controller 21 can be implemented by hardware such as a circuit device where a function of the controller 21 is provided, or can also be implemented by an arithmetic device such as a central processing unit (CPU) executing software where the function is provided.

In the above embodiments, FIGS. 4 to 8 show examples, and the change ratio of the liquid surface height (slopes of the graphs shown in FIGS. 4 to 8) is different for each reagent depending on a size of a reagent bottle or a aspiration amount relative to a filling amount of the reagent.

In the above embodiments, it has been described that the five ranges including the ranges 1 to 5 used to determine whether the liquid surface height is normal are provided, but the number of determination ranges is not limited thereto. For example, when a previously detected liquid surface is in the range 2 and a subsequently detected liquid surface is above the range 1, it is considered to further divide the range 3 by subdividing conditions regarded as normal.

In the above embodiments, when determining a size and a threshold of each range, since there are a plurality of factors to be studied such as a shape of the reagent bottle 10, accuracy of the operation of the reagent dispensing mechanism 7 in the upper-lower direction, and a degree of abnormality (that is, whether to prioritize continuing dispensing, or whether to prioritize detecting abnormality), it is desirable to perform determination based on various studies including experiments.

In the above embodiments, when obtaining a next liquid surface height based on a previous liquid surface height stored in the storage unit 21a, it is also assumed that a cross-sectional shape of the reagent bottle 10 is not constant. Therefore, when a plurality of cross-sectional shapes of the reagent bottle 10 are prepared, a liquid surface height in the reagent bottle 10 is detected, and the cross-sectional shape of the reagent bottle 10 is selected, a more accurate next liquid surface height may be calculated. Alternatively, even if a cross-sectional area of the reagent bottle 10 is sufficiently large and a predetermined amount of reagent is aspirated, when lowering of the reagent liquid surface is, for example, about 0.1 mm, the next liquid surface height may not be calculated using the cross-sectional shape.

In the above embodiments, the information on the liquid surface height during the previous dispensing is necessary. There is no liquid surface height information during initial aspiration, but for example, when an operation of acquiring liquid surface heights of all the reagent bottles 10 provided on the reagent disk 9 is executed by the liquid surface detection mechanism 7b in an initialization operation executed immediately after the device is activated, the liquid surface height information can be acquired before the initial aspiration.

In the above embodiments, an amount of a liquid aspirated by the probe may be different for each type of a liquid. In this case, sizes of the ranges 1 to 5 may be changed for each type of a liquid.

An example in which a liquid aspirated by the probe is a reagent has been mainly described in the above embodiments, but the invention can also be applied to a case where another liquid is aspirated by the probe. Similarly, the invention can be applied to a case where another liquid container has a structure similar to that of the reagent bottle 10 instead of using the reagent bottle 10.

### Reference Signs List

100: automatic analyzer
1: reaction disk
2: reaction container
3: cleaning mechanism
4: spectrophotometer
4a: light source
5: stirring mechanism
6: stirring mechanism
7, 8: reagent dispensing mechanism
7a, 8a: reagent probe
7b, 8b: liquid surface detection mechanism
9: reagent disk
10: reagent bottle
10a: reagent bottle main body
10b: partition
10c: air hole
10d: opening portion
11: sample dispensing mechanism
11a: sample probe
11b: liquid surface detection mechanism
13: cleaning tank
14: detergent
15: sample container
16: rack
17: sample transport mechanism
18: reagent syringe
19: sample syringe
20: cleaning pump
21: controller
21a: storage unit
21b: control unit
30: cleaning tank
31: cleaning tank
32: cleaning tank
33: cleaning tank

## Claims

1. An automatic analyzer including a dispensing probe configured to dispense a liquid, the automatic analyzer comprising:
a liquid surface detection unit configured to detect a liquid surface of the liquid;
a storage unit configured to store a liquid surface height when the liquid surface has finished lowering by the dispensing probe aspirating the liquid; and
a control unit configured to control the dispensing probe, wherein
when the liquid surface is detected in a first range formed by a first variation range below the liquid surface height stored by the storage unit and a second variation range above the liquid surface height stored by the storage unit, the control unit determines that the liquid surface is normal,
when the liquid surface is detected in a second range below the first variation range, the control unit determines that the liquid surface is normal,
when the liquid surface is detected in a third range above the second variation range and a predetermined condition is satisfied, the control unit determines that the liquid surface is normal, and
when the liquid surface is detected in a fourth range above the third range or a fifth range below the second range, the control unit determines that the liquid surface is abnormal.

2. The automatic analyzer according to claim 1, wherein
the dispensing probe continuously aspirates the liquid housed in a liquid container two times or more,
the liquid container includes an opening portion into which the dispensing probe is inserted, and a partition that divides inside of the liquid container into a region below the opening portion and a region outside the opening portion,
the predetermined condition is a fact that the liquid surface height stored by the storage unit when the dispensing probe previously aspirates the liquid from the liquid container is in the second range, and
when the liquid surface is detected in the third range and the predetermined condition defined based on the liquid container is satisfied, the control unit determines that the liquid surface is normal.

3. The automatic analyzer according to claim 2, wherein
when the liquid surface is detected in the third range without satisfying the predetermined condition, the control unit determines that the liquid surface is abnormal.

4. The automatic analyzer according to claim 1, wherein
when the liquid surface is not detected before the dispensing probe reaches a lowest point, the control unit determines that the liquid surface is abnormal.

5. The automatic analyzer according to claim 1, wherein
the third range is a region wider than the second range.

6. The automatic analyzer according to claim 1, wherein
the control unit determines whether the liquid surface is normal according to a change rate of the liquid surface height for each dispensing when the liquid surface lowers due to the dispensing probe aspirating the liquid.

7. The automatic analyzer according to claim 6, wherein
the control unit designates an amount by which the dispensing probe aspirates the liquid for each dispensing, and
in a case where a difference between a first change rate of a liquid surface height when the liquid surface lowers according to the designated aspiration amount and a second change rate of a liquid surface height of the liquid surface detected by the liquid surface detection unit is equal to or larger than a threshold, the control unit determines that the liquid surface is abnormal.

8. The automatic analyzer according to claim 6, wherein
the control unit performs the determination by using only a part of history of detection results of the liquid surface height.

9. The automatic analyzer according to claim 1, wherein
the control unit lowers the dispensing probe toward the liquid at a first speed to a speed switching height above the liquid surface height stored by the storage unit, and
the control unit detects the liquid surface by the liquid surface detection unit while lowering the dispensing probe at a second speed lower than the first speed after the dispensing probe reaches the speed switching height.

10. The automatic analyzer according to claim 9, wherein
the control unit gradually decreases an absolute value of the second speed as time elapses, and
the control unit controls the second speed such that the liquid surface detection unit detects the liquid surface in a period in which the absolute value of the second speed is changed.

11. The automatic analyzer according to claim 1, wherein
the dispensing probe aspirates the liquid housed in a liquid bottle, and
the control unit calculates, for each shape of the liquid bottle, an amount by which the liquid surface lowers every time the dispensing probe aspirates the liquid from the liquid bottle.

12. The automatic analyzer according to claim 1, wherein
at least any one of the first range, the second range, the third range, the fourth range, and the fifth range is different for each type of the liquid.

13. A dispensing method for dispensing a liquid by using a dispensing probe configured to dispense the liquid, the dispensing method comprising:
a step of detecting a liquid surface of the liquid;
a step of storing, in a storage unit, a liquid surface height when the detected liquid surface has finished lowering by the dispensing probe aspirating the liquid; and
a step of controlling the dispensing probe, wherein
in the step of controlling the dispensing probe, when the liquid surface is detected in a first range formed by a first variation range below the liquid surface height stored by the storage unit and a second variation range above the liquid surface height stored by the storage unit, it is determined that the liquid surface is normal,
in the step of controlling the dispensing probe, when the liquid surface is detected in a second range below the first variation range, it is determined that the liquid surface is normal,
in the step of controlling the dispensing probe, when the liquid surface is detected in a third range above the second variation range and a predetermined condition is satisfied, it is determined that the liquid surface is normal, and
in the step of controlling the dispensing probe, when the liquid surface is detected in a fourth range above the third range or a fifth range below the second range, it is determined that the liquid surface is abnormal.
